# EUROPEAN PATENT APPLICATION

(11) **EP 4 832 312 A1**
(43) Date of publication of application: **28.10.2026**
(21) Application number: 24914969.1
(22) Date of filing: 24.10.2024
(51) Int. Cl.: H02K 3/50, H02K 5/22

(54) **MOTOR WIRE OUTLET ASSEMBLY, MOTOR AND HOUSEHOLD APPLIANCE**

(30) Priority: 02.01.2024 CN 202420021791 U
(71) Applicant: Guangdong Welling Motor Manufacturing Co., Ltd., Foshan, Guangdong 528311 (CN)
(72) Inventor: HU, Jiantao, Foshan, Guangdong 528311 (CN); LIANG, Kangsheng, Foshan, Guangdong 528311 (CN); LIU, Wen, Foshan, Guangdong 528311 (CN); LI, Guoxiong, Foshan, Guangdong 528311 (CN)
(74) Representative: Ran, Handong
(86) International application number: PCT/CN2024/127135
(87) International publication number: WO 2025/145752

(57) **Abstract**

Disclosed in the present application are a motor wire outlet assembly, a motor and a household appliance. The motor wire outlet assembly comprises a wire outlet rubber nozzle and an elastic plug, the wire outlet rubber nozzle comprising a wire outlet body and a wire outlet nozzle arranged on the wire outlet body; the wire outlet body is arranged at a wire outlet of the motor, and a power line of the motor penetrates out of the wire outlet nozzle through the wire outlet body; the wire outlet body is arranged at the wire outlet, and the wire outlet body is deformed under the compression of a plastic-encapsulated housing to seal the wire outlet; the power line penetrates through the elastic plug, and the elastic plug is in sealed connection with the wire outlet nozzle.

## Description

This application claims priority to Chinese Patent Application No. 202420021791.5, filed on January 2, 2024, the entire contents of which are incorporated herein by reference.

### TECHNICAL FIELD

The present application relates to the technical field of motors, and in particular to a motor wire outlet assembly.

### BACKGROUND

In use environments with high requirements for waterproofing and gas-proofing of motors, the existing motor sealing structure at the stator opening and the wire outlet wire of the electronic control board adopts an elastic wire outlet rubber nozzle, such as a rubber material. The rubber wire outlet rubber nozzle is installed at the wire outlet of the motor, and the wire outlet is sealed through the deformation of the wire outlet rubber nozzle to achieve waterproofing at the wire outlet. The wire outlet rubber nozzle has a wire outlet nozzle for the power cord to pass through. In order to achieve the purpose of waterproofing, a fastener is usually used to tightly tie the wire outlet nozzle for sealing. However, after being squeezed, there is a problem that the part around the cable tie deforms and warps up, resulting in a large gap, which leads to poor sealing performance in use environments with high requirements for waterproofing and gas-proofing of motors.

### SUMMARY

The main purpose of the present application is to provide a motor wire outlet assembly, aiming to solve the problem of poor sealing performance of the above-mentioned motor.

In order to achieve the above purpose, the present application provides a motor wire outlet assembly, including:
a wire outlet rubber nozzle, the wire outlet rubber nozzle including a wire outlet body and a wire outlet nozzle provided on the wire outlet body, the wire outlet body being configured to connect with a motor, and the wire outlet nozzle being configured for a power cord to pass through; and
an elastic plug, having a wire passing hole for the power cord to pass through, the elastic plug being sealed with the wire outlet nozzle.

Exemplarily, the motor wire outlet assembly further includes a protective sleeve, the protective sleeve is configured to sheathe the power cord, and two ends of the elastic plug are sealingly connected to the protective sleeve and the wire outlet nozzle, respectively.

Exemplarily, the elastic plug includes a first plug and a second plug, the first plug is connected to the wire outlet nozzle, and the second plug is connected to the protective sleeve.

Exemplarily, the first plug and the protective sleeve are in an interference fit, and the second plug and the wire outlet nozzle are in an interference fit.

Exemplarily, the elastic plug further includes a partition portion, the first plug and the second plug are located on opposite sides of the partition portion, the wire outlet nozzle sheathes the first plug and is close to the partition portion, and the protective sleeve sheathes the second plug and is close to the partition portion.

Exemplarily, the first plug is columnar and an end of the first plug is provided with a first chamfer, the second plug is columnar and an end of the second plug is provided with a second chamfer; and/or, the first plug and the second plug are similar in size and/or length.

Exemplarily, a cross-sectional area of the partition portion is greater than cross-sectional areas of the wire outlet nozzle and the protective sleeve; or, the cross-sectional area of the partition portion is greater than cross-sectional areas of the first plug and the second plug.

Exemplarily, a cross section of the wire outlet nozzle is circular, and the elastic plug is matched with the wire outlet nozzle.

Exemplarily, the motor wire outlet assembly further includes a first fastener, and the first fastener tightens and seals the wire outlet nozzle and the elastic plug.

Exemplarily, an end of the wire outlet nozzle is provided with an annular groove, and the first fastener is arranged in the annular groove.

Exemplarily, the elastic plug is provided with a plurality of wire passing holes penetrating therethrough, and the plurality of wire passing holes are uniformly distributed in an annular shape.

Exemplarily, a diameter of the wire passing hole is 1.6 mm to 1.8 mm.

Exemplarily, the wire outlet rubber nozzle is made of a highly elastic polymer material, and the elastic plug is made of a highly elastic polymer material.

Exemplarily, the protective sleeve is made of polyvinyl chloride.

The present application also provides a motor, including the motor wire outlet assembly as described above.

The present application also provides a household appliance, including the motor as described above.

### BRIEF DESCRIPTION OF THE DRAWINGS

In order to more clearly illustrate the technical solutions in the embodiments of the present application or in the related art, the drawings required to be used in the description of the embodiments or the related art will be briefly introduced below. Obviously, the drawings in the following description are only some embodiments of the present application. For those of ordinary skill in the art, other drawings can also be obtained based on these drawings without creative labor.
FIG. 1 is a schematic structural view of an embodiment of a motor wire outlet assembly of the present application.
FIG. 2 is a schematic cross-sectional structural view of FIG. 1.
FIG. 3 is a schematic structural view after a protective sleeve and an elastic plug in FIG. 1 are separated.
FIG. 4 is a schematic structural view after the wire outlet nozzle and the elastic plug in FIG. 3 are further separated.
FIG. 5 is a schematic structural view after the wire outlet rubber nozzle is removed in FIG. 4.
FIG. 6 is a schematic structural view of the wire outlet rubber nozzle and the elastic plug in FIG. 4 being matched.
FIG. 7 is a schematic structural view of an embodiment of the wire outlet rubber nozzle in FIG. 4.
FIG. 8 is a schematic structural view of an embodiment of the elastic plug in FIG. 4.

Description of reference signs:

**[Table_sm_0001]**

| Reference sign | Name | Reference sign | Name |
|---|---|---|---|
| 10 | motor wire outlet assembly | 33 | first plug |
| 20 | wire outlet rubber nozzle | 331 | first chamfer |
| 21 | wire outlet body | 34 | second plug |
| 22 | wire outlet nozzle | 341 | second chamfer |
| 221 | annular groove | 40 | power cord |
| 30 | elastic plug | 50 | protective sleeve |
| 31 | wire passing hole | 61 | first fastener |
| 32 | partition portion | 62 | second fastener |

The realization of the purpose, functional features and advantages of the present application will be further explained in conjunction with the embodiments and with reference to the accompanying drawings.

### DETAILED DESCRIPTION OF THE EMBODIMENTS

The technical solutions in the embodiments of the present application will be clearly and completely described below in conjunction with the accompanying drawings in the embodiments of the present application. Obviously, the described embodiments are only some part of the embodiments of the present application, rather than all the embodiments. Based on the embodiments in the present application, all other embodiments obtained by those of ordinary skill in the art without creative effort shall fall within the scope of the present application.

It should be noted that all directional indications (such as up, down, left, right, front, back...) in the embodiments of the present application are only used to explain the relative positional relationship, movement conditions, etc. between various components in a specific posture (as shown in the accompanying drawings). If the specific posture changes, the directional indication also changes accordingly.

Besides, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is not within the scope of the present application.

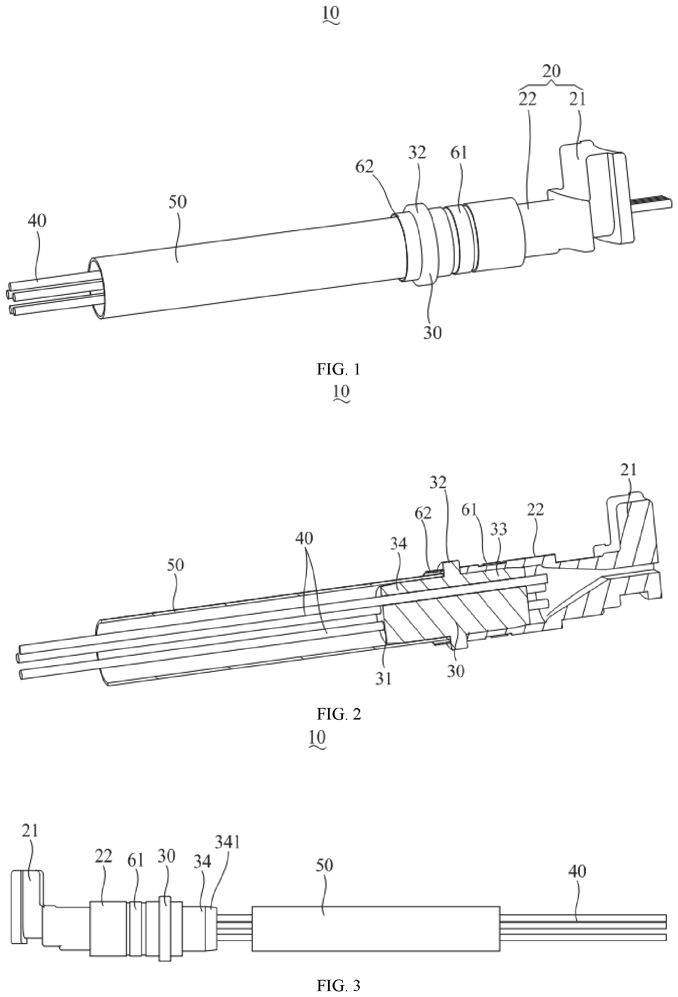

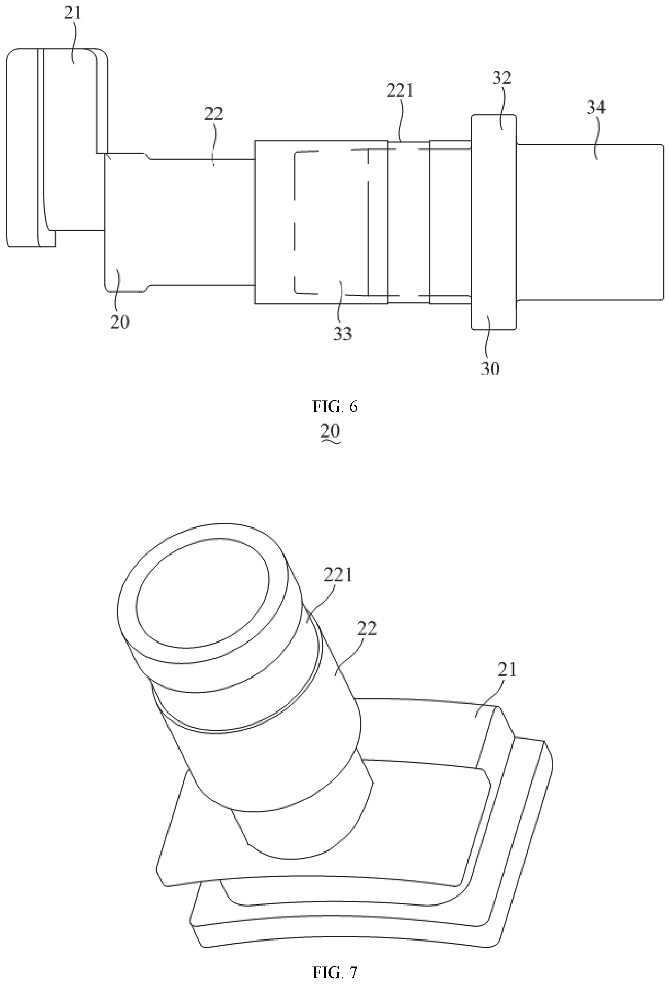

As shown in FIG. 1 to FIG. 8, the present application provides a motor. The motor can be used in household appliances such as air conditioners and washing machines. The existing wire outlet method of the motor is: first welding and fixing the leads of the stator winding and the power cord 40 on the circuit board respectively, and then passing the power cord 40 out of the motor.

The motor includes a power cord 40 and a stator assembly (not shown in the figure). The stator assembly is encapsulated to form a plastic-sealed housing (not shown in the figure). The stator assembly has winding leads (not shown in the figure). One end of the power cord 40 is connected to the winding leads and encapsulated and fixed in the plastic-sealed housing, and the other end passes out of the plastic-sealed housing from the wire outlet rubber nozzle 20. The existing motor sealing structure at the stator opening and the wire outlet wire of the electronic control board generally adopts two methods. One is to use a hard plastic wire clamp made of nylon or PBT material, but the wire clamp made of hard plastic material cannot fit tightly with the wire outlet wire of the electronic control board, and the contact between the wire outlet wire and the wire protective sleeve is also difficult to completely seal, resulting in poor waterproof and gas-proof effects; the existing rubber wire outlet rubber nozzle adopts a wire outlet nozzle 22 with a flat opening, and the wire outlet rubber nozzle is squeezed at the wire outlet by the plastic-sealed housing, and the wire outlet rubber nozzle deforms to solve the problem of sealing the wire outlet. The wire outlet rubber nozzle 20 has a wire outlet nozzle 22 extending to the outside of the plastic-sealed housing. The wire outlet nozzle 22 is provided with a flat opening. After the wire outlet nozzle 22 and the protective sleeve 50 of the power cord 40 are sheathed, a cable tie is used to tighten and seal them. However, after being squeezed, there is a problem that the part around the cable tie deforms and warps up, resulting in a large gap, which leads to poor sealing performance in use environments with high requirements for waterproofing and gas-proofing of motors.

In order to solve the above problems, in an embodiment, the motor wire outlet assembly 10 includes a wire outlet rubber nozzle 20 and an elastic plug 30. By using the elastic plug 30 to connect the wire outlet nozzle 22 of the wire outlet rubber nozzle 20, the elastic plug 30 and the wire outlet nozzle 22 are sealingly connected, and the power cord 40 passes through the wire outlet nozzle 22 and the elastic plug 30. In this way, by connecting the wire outlet nozzle 22 through the elastic plug 30, the elastic plug 30 plays a filling role, and because of its elastic properties, it can deform, thereby realizing the sealing of the wire outlet nozzle 22.

In another embodiment, the motor wire outlet assembly 10 includes a wire outlet rubber nozzle 20, a protective sleeve 50, and an elastic plug 30. The wire outlet rubber nozzle 20 is made of an elastic material. The wire outlet rubber nozzle 20 includes a wire outlet body 21 and a wire outlet nozzle 22 provided on the wire outlet body 21. The wire outlet body 21 is provided at the wire outlet of the motor. The power cord 40 of the motor passes out from the wire outlet nozzle 22 through the wire outlet body 21. The wire outlet body 21 is provided at the wire outlet, and the plastic-sealed housing squeezes the wire outlet body 21 to deform to realize the sealing at the wire outlet. The protective sleeve 50 is sheathed outside the power cord 40. The power cord 40 passes through the elastic plug 30, and the two ends of the elastic plug 30 are sealingly connected to the protective sleeve 50 and the wire outlet nozzle 22 respectively. Compared with the existing solution where after the wire outlet nozzle 22 and the protective sleeve 50 of the power cord 40 are sheathed, a cable tie is used to tighten and seal them, but after being squeezed, there is a problem that the part around the cable tie deforms and warps up, resulting in a large gap, which leads to poor sealing performance in use environments with high requirements for waterproofing and gas-proofing of motors, the present solution uses the elastic plug 30 as an intermediate piece to respectively connect the wire outlet nozzle 22 of the wire outlet rubber nozzle 20 and the protective sleeve 50 of the power cord 40. The elastic plug 30 and the wire outlet nozzle 22 are sealingly connected, and the elastic plug 30 and the protective sleeve 50 are sealingly connected. The power cord 40 passes through the wire outlet nozzle 22, the elastic plug 30, and the protective sleeve 50. In this way, by respectively connecting the wire outlet nozzle 22 and the protective sleeve 50 through the elastic plug 30, the elastic plug 30 plays a filling role, and because of its elastic properties, it can deform, so that when the cable tie is used to tighten and seal, the elastic plug 30 can deform, thereby avoiding the occurrence of gaps.

The technical solution of the present application uses the elastic plug 30 as an intermediate piece to respectively connect the wire outlet nozzle 22 of the wire outlet rubber nozzle 20 and the protective sleeve 50 of the power cord 40. The elastic plug 30 and the wire outlet nozzle 22 are sealingly connected, and the elastic plug 30 and the protective sleeve 50 are sealingly connected. The power cord 40 passes through the wire outlet nozzle 22, the elastic plug 30, and the protective sleeve 50. In this way, by respectively connecting the wire outlet nozzle 22 and the protective sleeve 50 through the elastic plug 30, the elastic plug 30 plays a filling role, and because of its elastic properties, it can deform, thereby realizing the sealing of the wire outlet nozzle 22 and the protective sleeve 50.

Specifically, the cross section of the wire outlet nozzle 22 is circular, and the elastic plug 30 is matched with the wire outlet nozzle 22. The wire outlet nozzle 22 is circular, and the elastic plug 30 is also circular. The circular design of the circular wire outlet nozzle 22 and the elastic plug 30 ensures a tight fit between the wire outlet nozzle 22 and the elastic plug 30. This design not only improves the overall aesthetics of the product, but also has good practicability. On this basis, the material selection of the elastic plug 30 is also crucial. Generally speaking, the elastic plug 30 is made of a material with good elasticity and wear resistance, such as silicone, rubber, etc. These materials not only ensure the durability of the elastic plug 30 during use, but also ensure the sealing performance.

In addition, in order to meet the use requirements in different scenarios, the design of the wire outlet nozzle 22 and the elastic plug 30 can also be diversified and innovated. For example, the wire outlet nozzle 22 can be diversified in design according to the type and size of the cable to adapt to various types of cables. The elastic plug 30 can adopt different colors and materials to meet the user's needs for aesthetics and personality.

Referring to FIG. 1 to FIG. 8, further, the elastic plug 30 includes a partition portion 32, and a first plug 33 and a second plug 34 located on opposite sides of the partition portion 32. The first plug 33 is connected to the wire outlet nozzle 22, and the second plug 34 is connected to the protective sleeve 50.

Specifically, the wire outlet rubber nozzle 20 is made of a highly elastic polymer material, not limited to rubber, silicone, etc., and the wire outlet body 21 and the wire outlet nozzle 22 are integrally formed. The elastic plug 30 is made of a highly elastic polymer material, not limited to rubber, silicone, etc.

Further, in order to ensure the sealing performance after the first plug 33 and the wire outlet nozzle 22 are sheathed and the sealing performance after the second plug 34 and the protective sleeve 50 are sheathed, the first plug 33 and the protective sleeve 50 are in an interference fit; and the second plug 34 and the wire outlet nozzle 22 are in an interference fit. It can be understood that the interference fit is provided to ensure tight connection and sealing effect between various components. In this design, the interference fit between the first plug 33 and the protective sleeve 50, and between the second plug 34 and the wire outlet nozzle 22 plays a key role. At the same time, considering that during long-term use, the wire outlet rubber nozzle 20 is made of silicone material, and the elastic plug 30 is made of silicone material, the interference-fitted components may cause a decrease in sealing performance due to wear, while the silicone material has good wear resistance.

Further, the wire outlet nozzle 22 sheathes the first plug 33 and is close to the partition portion 32; the protective sleeve 50 sheathes the second plug 34 and is close to the partition portion 32. The provision of the partition portion 32 not only separates the first plug 33 and the second plug 34, but also facilitates assembly and disassembly.

Referring to FIG. 2 to FIG. 8, further, the first plug 33 is columnar, and an end thereof is provided with a first chamfer 331. The second plug 34 is columnar, and an end thereof is provided with a second chamfer 341. The design of the first plug 33 and the second plug 34 also needs to consider the specifications and shapes of the cables to ensure that they can closely match the cables and prevent the cables from loosening or being damaged during use. When the first plug 33 is inserted into the wire outlet nozzle 22, the first chamfer 331 plays a guiding role, so that the first plug 33 can smoothly pass through the wire outlet nozzle 22. At the same time, when the second chamfer 341 is inserted into the protective sleeve 50, the partition portion 32 can play a certain limiting role.

In other embodiments, the first plug 33 and the second plug 34 can also be of other shapes, such as a bullet shape or an arrow shape.

Further, the area of the partition portion 32 is greater than the areas of the wire outlet nozzle 22 and the protective sleeve 50.

In an embodiment, the partition portion 32 is disc-shaped, and the first plug 33 and the second plug 34 are respectively located on both sides of the partition portion 32, like a "double-ended spinning top".

In an embodiment, the partition portion 32 is in other forms, such as a square, a rectangle, a rhombus, etc.

In an embodiment, the motor wire outlet assembly 10 further includes a first fastener 61 and a second fastener 62. The first fastener 61 tightens and seals the wire outlet nozzle 22 and the elastic plug 30; the protective sleeve 50 and the elastic plug 30 are tightened and sealed by the second fastener 62. The functions of the first fastener 61 and the second fastener 62 further ensure the sealing performance of the wire outlet nozzle 22 and prevent loosening. The first fastener 61 tightly seals the wire outlet nozzle 22 and the elastic plug 30, ensuring the stability at the wire outlet nozzle 22. The protective sleeve 50 and the elastic plug 30 are tightened and sealed by the second fastener 62, forming a complete protection system. The function of the second fastener 62 makes the sealing between the protective sleeve 50 and the elastic plug 30 tighter, further improving the protective performance. The first fastener 61 and the second fastener 62 can be cable ties, snap rings, hose clamps, etc.

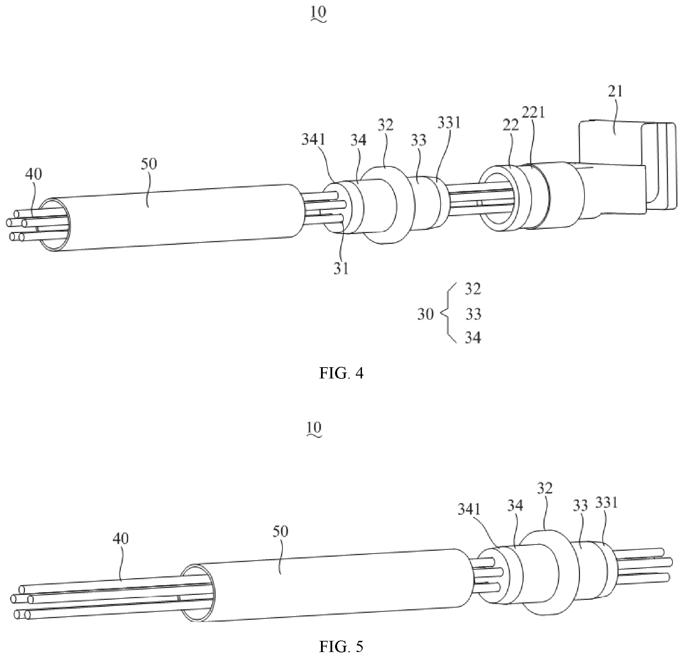

Referring to FIG. 4, FIG. 6, and FIG. 7, in an embodiment, an end of the wire outlet nozzle 22 is provided with an annular groove, the first fastener 61 is arranged in the annular groove and tightens and seals the wire outlet nozzle 22 and the elastic plug 30; the protective sleeve 50 and the elastic plug 30 are tightened and sealed by the second fastener 62. The design of the annular groove enables the first fastener 61 to better fit tightly with the wire outlet nozzle 22, further strengthening the sealing effect. This design not only improves the stability of the wire outlet nozzle 22, but also avoids potential safety hazards caused by loosening. In addition, compared with other solutions, adding a sealing groove improves the stability of the cable tie fixation, and the manufacturing process of the sealing groove is also relatively simple and easy for mass production.

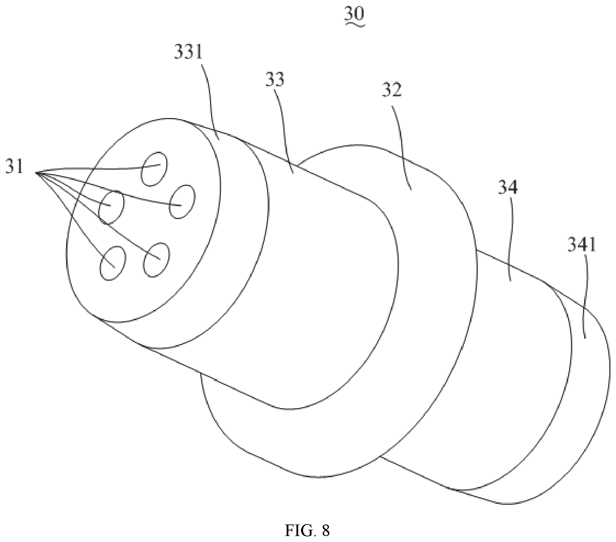

Referring to FIG. 8, further, the elastic plug 30 is provided with a plurality of wire passing holes 31 penetrating therethrough, and the plurality of wire passing holes 31 are uniformly distributed in an annular shape. The power cord 40 passes through the elastic plug 30 via the wire passing holes 31, and the two ends of the elastic plug 30 respectively pass through the protective sleeve 50 and the wire outlet nozzle 22. When the first fastener 61 is tied to tighten and seal the wire outlet nozzle 22 and the elastic plug 30; and the protective sleeve 50 and the elastic plug 30 are tightened and sealed by the second fastener 62, since the wire passing holes 31 are arranged in an annular shape, compared with other arrangements, the stress is more uniform and the damage to the power cord 40 is smaller.

Further, the diameter of the wire passing hole 31 is 1.6 mm to 1.8 mm, which can not only meet the threading of most models of power cords 40, but also ensure the quality of the elastic plug 30.

In an embodiment, the protective sleeve 50 is made of polyvinyl chloride; in another embodiment, the protective sleeve 50 is made of silicone or rubber.

The present application also provides a household appliance, which includes a motor. The motor applies the above-mentioned motor wire outlet assembly 10. For the specific structure of the motor wire outlet assembly 10, reference is made to the above-mentioned embodiments. Since the household appliance adopts all the technical solutions of all the above-mentioned embodiments, it at least has all the beneficial effects brought by the technical solutions of the above-mentioned embodiments, which will not be repeated here one by one. The household appliance can be an air conditioner, a washing machine, etc.

The above contents are only embodiments of the present application, and do not limit the scope of the present application. Any equivalent structural transformation made by using the contents of the specification and drawings of the present application under the concept of the present application, or direct/indirect application in other related technical fields, is included in the scope of the present application.

## Claims

1. A motor wire outlet assembly, comprising:
a wire outlet rubber nozzle, comprising a wire outlet body and a wire outlet nozzle provided on the wire outlet body, the wire outlet body being configured to connect with a motor, and the wire outlet nozzle being configured for a power cord to pass through; and
an elastic plug, having a wire passing hole for the power cord to pass through, the elastic plug being sealed with the wire outlet nozzle.

2. The motor wire outlet assembly according to claim 1, further comprising a protective sleeve, wherein the protective sleeve is configured to sheathe the power cord, and two ends of the elastic plug are sealingly connected to the protective sleeve and the wire outlet nozzle, respectively.

3. The motor wire outlet assembly according to claim 2, wherein the elastic plug comprises a first plug and a second plug, the first plug is connected to the wire outlet nozzle, and the second plug is connected to the protective sleeve.

4. The motor wire outlet assembly according to claim 3, wherein the first plug and the protective sleeve are in an interference fit, and the second plug and the wire outlet nozzle are in an interference fit.

5. The motor wire outlet assembly according to claim 3 or 4, wherein the elastic plug further comprises a partition portion, the first plug and the second plug are located on opposite sides of the partition portion, the wire outlet nozzle sheathes the first plug and is close to the partition portion, and the protective sleeve sheathes the second plug and is close to the partition portion.

6. The motor wire outlet assembly according to claim 5, wherein:
the first plug is columnar and an end of the first plug is provided with a first chamfer, and the second plug is columnar and an end of the second plug is provided with a second chamfer; and/or
the first plug and the second plug are similar in size and/or length.

7. The motor wire outlet assembly according to claim 5 or 6, wherein:
a cross-sectional area of the partition portion is greater than cross-sectional areas of the wire outlet nozzle and the protective sleeve; or
a cross-sectional area of the partition portion is greater than cross-sectional areas of the first plug and the second plug.

8. The motor wire outlet assembly according to any one of claims 1 to 7, wherein a cross section of the wire outlet nozzle is circular, and the elastic plug is matched with the wire outlet nozzle.

9. The motor wire outlet assembly according to any one of claims 1 to 8, further comprising a first fastener, wherein the first fastener tightens and seals the wire outlet nozzle and the elastic plug.

10. The motor wire outlet assembly according to claim 9, wherein an end of the wire outlet nozzle is provided with an annular groove, and the first fastener is arranged in the annular groove.

11. The motor wire outlet assembly according to any one of claims 1 to 10, wherein the elastic plug is provided with a plurality of wire passing holes penetrating therethrough, and the plurality of wire passing holes are uniformly distributed in an annular shape.

12. The motor wire outlet assembly according to claim 11, wherein a diameter of the wire passing hole ranges from 1.6 mm to 1.8 mm.

13. The motor wire outlet assembly according to any one of claims 1 to 12, wherein the wire outlet rubber nozzle is made of a highly elastic polymer material, and the elastic plug is made of a highly elastic polymer material.

14. The motor wire outlet assembly according to any one of claims 2 to 13, wherein the protective sleeve is made of polyvinyl chloride.

15. A motor, comprising the motor wire outlet assembly according to any one of claims 1 to 14.

16. A household appliance, comprising the motor according to claim 15.
